# EUROPEAN PATENT SPECIFICATION

(11) **EP 3 772 874 B1**
(45) Date of publication and mention of the grant of the patent: **22.12.2021**
(21) Application number: 20189627.1
(22) Date of filing: 05.08.2020
(51) Int. Cl.: H05B 47/19

(54) **INTELLIGENT LAMP**
INTELLIGENTE LAMPE
LAMPE INTELLIGENTE

(30) Priority: 06.08.2019 CN 201921265054 U
(43) Date of publication of application: 10.02.2021
(73) Proprietor: Xiamen Leedarson Lighting Co., Ltd., Xiamen, Fujian 361010 (CN)
(72) Inventor: Chen, Xiaohong, Xiamen, Fujian (CN)
(74) Representative: Petraz, Gilberto Luigi

(56) References cited:
- US-A1- 2013 136 454
- US-A1- 2013 285 544
- US-A1- 2017 130 907

## Description

### TECHNICAL FIELD

The present application relates to the technical field of lighting devices. In particular the invention relates to an intelligent lamp according to claim 1. Preferred embodiments are defined by the appendant claims.

### BACKGROUND

In recent years, with the significant progress of technology of the Internet of Things, intelligent illumination begins to enter numerous households. An LED lamp may be controlled by a mobile terminal by means of arranging a wireless communication module and an antenna in the LED lamp, more conveniences are brought into people's lives.

In a conventional intelligent lamp, the light source board is usually provided with a yielding hole to be passed through by the antenna, the space is wasted, and signal stability is poor. For example, US2017130907A1 discloses a lighting device comprising: a heat dissipating frame having a receiving recess formed therein and a plurality of insertion holes formed in the upper surface thereof; a light source module mounted on an upper surface of the heat dissipating frame, and including a first substrate in which a plurality of coupling holes is formed at positions facing the plurality of insertion holes; and a control module received in the receiving recess of the heat dissipating frame, and including a second substrate having a plurality of connecting terminals formed on a side surface thereof and projecting in a lengthwise direction, wherein the control module is disposed vertically upright within the receiving recess such that the plurality of connecting terminals faces upward, and the plurality of connecting terminals is inserted in the plurality of insertion holes and the plurality of coupling holes is connected to the light source module. US2013136454A1 discloses an LED light source comprises a light source plate, a supporting frame, a transceiver module, a driving element and a secondary optical element. The light source plate comprises a first circuit board and a plurality of light emitting elements. The supporting frame comprises a pillar portion. The transceiver module comprises an antenna unit and a radio frequency unit. The antenna unit is disposed on the pillar portion for receiving a radio frequency signal and transmitting it to the radio frequency unit. The radio frequency unit outputs a driving signal to the driving element according to the radio frequency signal. The driving element drives each of the light emitting elements according to the driving signal. The light beams supplied by the light emitting elements are emitted from the secondary optical element. Therefore, users can remotely control the light source through wireless manners. US2013285544A1 discloses an apparatus and system for incorporating an unshielded antenna into an LED fixture, such that the LED fixture can be individually controlled through RF signals, such as those propagated by a home automation system or other RF-based lighting control systems. An LED fixture is provided that includes an antenna that is coupled to an electronic control board of the LED fixture and extends to a region external to the heat sink of the LED fixture. By extending the antenna in this manner, RF signals can be received and transmitted by the control board of the LED fixture with significantly reduced attenuation.

Regarding the existing intelligent lamp, the antenna requires an adapter plate to serve as a substrate, then, the antenna is connected with modules through an elastic piece terminal, however, oxidation is prone to occur and poor contact is caused accordingly if only relying on the contact between the elastic piece terminal and a bonding pad of the adapter plate, so that poor signal consistency is caused, and the cost is high.

### SUMMARY

The purpose of the present application is providing an intelligent lamp which aims at solving a technical problem that poor signal consistency of the antenna of the existing intelligent lamp is caused if only relying on the connection between the elastic piece terminal and the modules.

In order to achieve the purpose, the technical solution adopted by the present application is providing an intelligent lamp, including:
a housing having an opening at one end thereof;
a lens arranged to be covered on the end of the housing having the opening;
a heat sink arranged in the housing;
a drive assembly arranged in the housing;
a light source module arranged on the heat sink and electrically connected with the drive assembly, the light source module comprises a light source board disposed on the heat sink; and
a communication module electrically connected with the drive assembly and comprising an antenna disposed on the light source board and a RF module arranged on one side of the heat sink away from the light source board, a metal terminal is fixedly connected with the RF module and sequentially penetrates through the heat sink and the light source board and is in contact with one end of the antenna, the other end of the antenna is fixedly connected with the light source board;
the metal terminal is a PIN needle connected between the RF module and the antenna;
wherein the antenna includes:
   an antenna body disposed on the light source board;
   a first support extending from one end of the antenna body towards the direction of the light source board and fixedly connected with the metal terminal; and
   a second support extending from one end of the antenna body towards the direction of the light source board and fixedly connected with the light source board;
the antenna body is located on a surface of the light source board through the first support and the second support.

Furthermore, a vertical distance between the antenna and the light source board is greater than or equal to 3 mm.

Furthermore, a plurality of grounding portions are arranged on the RF module, the light source board is in contact with the RF module in a conductive manner through the grounding portions, the light source board is attached to and conductive with the heat sink, and the heat sink is attached with the housing.

Furthermore, the intelligent lamp further includes a first metal fixing member configured to immobilize the light source board and the heat sink, a portion of the light source board which is in contact with the first metal fixing member is provided with a bonding pad, and the bonding pad is electrically connected with the grounding portions;
the first metal fixing member comprises a head portion and a rod portion which are connected in sequence, the head portion is in contact with the bonding pad, and the rod portion is in contact with the light source board.

Furthermore, a first connecting hole is arranged on the light source board, the first metal fixing member is in an interference fit with the first connecting hole, and the bonding pad is arranged on a position of the light source board corresponding to the first connecting hole.

Furthermore, the intelligent lamp further includes an insulating gasket disposed between the heat sink and the RF module.

Furthermore, the light source module further includes:
at least one LED light source arranged on the light source board, and the drive assembly is electrically connected with the LED light source.

Furthermore, the lens is a single-head lens, and includes:
a bead portion arranged to be corresponding to the LED light source;
a cup arranged to be covered on the LED light source, the bead portion is arranged at one end of the cup away from the LED light source; and
a ring extending outwardly from one end of the cup away from the LED light source;
the bead portion, the cup and the ring are sequentially arranged from inside to outside;
where, a surface of the bead portion away from the LED light source is provided with a first protrusion, and a surface of the ring and a surface of the cup facing the LED light source are provided with a second protrusion and a third protrusion, respectively.

The advantageous effects of the intelligent lamp provided by the present application lie in: as compared to the prior art, the antenna is disposed on the light source board, so that the antenna is overhead, and electronic components may be normally arranged on the light source board below the antenna. Space is effectively utilized. The light source board does not need to be provided with a through hole of antenna in a conventional manner; meanwhile, a transmission quality of the antenna is higher than that of the traditional solution;
furthermore, one end of the antenna is fixedly connected with the RF module through the metal terminal, and the other end of the antenna is fixedly connected with the light source board, the antenna need not to be stabilized by other structure as compared to the existing intelligent lamp, the antenna is high in stability and is not affected by skew of the communication module, so that the antenna may be enabled to match with different protocol requirements, for example, this metal antenna may be shared by many different protocols such as Zigbee 3.0 and BLE (Bluetooth Low Energy), and customization of protocols for customers is acceptable, the antenna has a wider application scope.

### BRIEF DESCRIPTION OF THE DRAWINGS

In order to describe the technical solutions in the embodiments of the present application more clearly, a brief introduction regarding the accompanying drawings that need to be used for describing the embodiments of the present application or the prior art is given below; it is apparent that the accompanying drawings described as follows are merely some embodiments of the present application, the person of ordinary skill in the art may also acquire other drawings according to the current drawings on the premise of paying no creative labor.
FIG. 1 illustrates a schematic diagram of a stereoscopic structure of an intelligent lamp provided by an embodiment of the present application;
FIG. 2 illustrates a schematic diagram of a disassembled structure of the intelligent lamp provided by an embodiment of the present application;

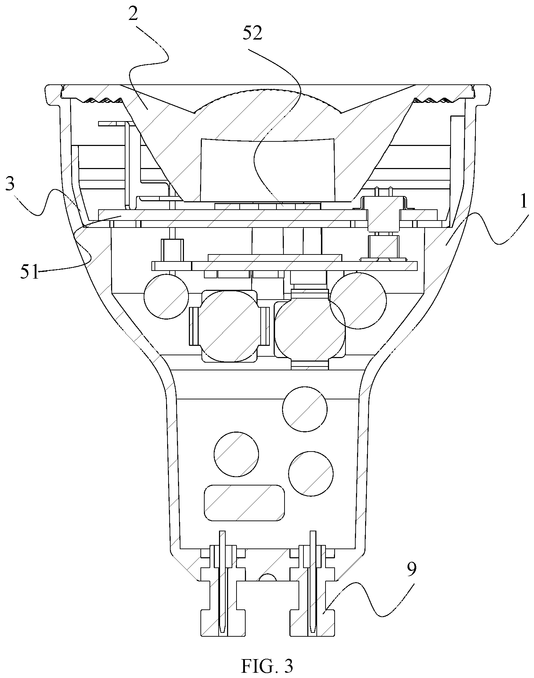

FIG. 3 illustrates a first schematic diagram of a cross-sectional structure of the intelligent lamp provided by an embodiment of the present application;
FIG. 4 illustrates a second schematic diagram of a cross-sectional structure of the intelligent lamp provided by an embodiment of the present application;
FIG. 5 illustrates a schematic diagram of stereoscopic structures of a drive assembly, a light source module and a communication module provided by an embodiment of the present application;
FIG. 6 illustrates a schematic diagram of a stereoscopic structure of an antenna provided by an embodiment of the present application;
FIG. 7 illustrates a schematic diagram of stereoscopic structures of the drive assembly and a RF module provided by an embodiment of the present application;
FIG. 8 illustrates a first schematic diagram of a stereoscopic structure of a lens provided by an embodiment of the present application; and
FIG. 9 illustrates a second schematic diagram of a stereoscopic structure of a lens provided by an embodiment of the present application.

Wherein, reference numerals in the figures are as follows:
1-housing; 2-lens; 21-beam plate; 211-the first protrusion; 22-cup; 221-the second protrusion; 23-ring; 231-the third protrusion; 3-heat sink; 4-drive assembly; 41-driving board; 5-light source module; 51-light source board; 510-the first connecting hole; 511-input terminal; 512-bonding pad; 513-the second through hole; 514-the fourth through hole; 52-LED light source; 6-communication module; 61-antenna; 610-antenna body; 611-the first support; 612-the second support; 613-the first through hole; 62-RF module; 621-PCB board; 6211-output terminal; 63-metal terminal; 71-the first metal fixing member; 711-head portion; 712-rod portion; 72-connection element; 8-insulating gasket; 9-copper pin.

### DESCRIPTION OF THE EMBODIMENTS

In order to make the purpose, the technical solution and the advantages of the present application be clearer and more understandable, the present application will be further described in detail below with reference to accompanying figures and embodiments. It should be understood that the specific embodiments described herein are merely intended to illustrate but not to limit the present application.

It should be noted that, when one component is described to be "fixed to" or "arranged on" another component, this component may be directly or indirectly arranged on another component. When one component is described to be "connected with" another component, it may be directly or indirectly connected to the other component. Orientation or position indicated by terms such as "upper", "lower", "left" and "right", "front", "rear", "vertical", "horizontal", "top", "bottom", "inside" and "outside" are based on the orientation or position relationships shown in the accompanying figures and is only used for the convenience of description, and should not be interpreted as limitation to the present application. Terms of "the first" and "the second" are only for the purpose of describing conveniently and should not be interpreted as indicating or implying relative importance or impliedly indicating the number of indicated technical features. "Multiple/a plurality of' means two or more unless there is an additional explicit and specific limitation.

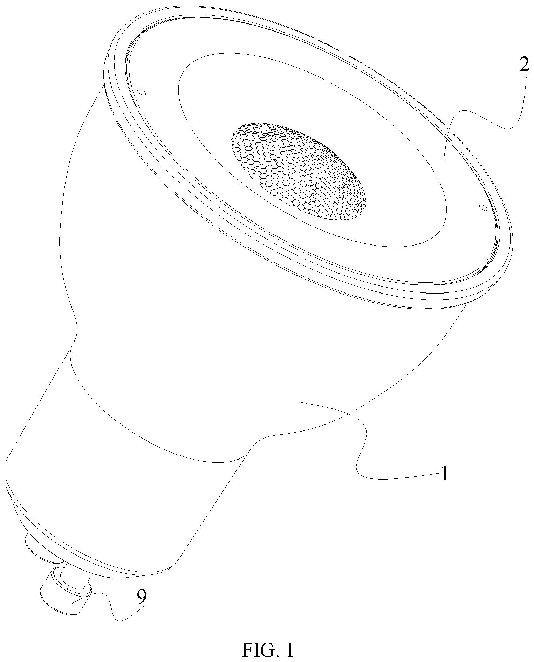

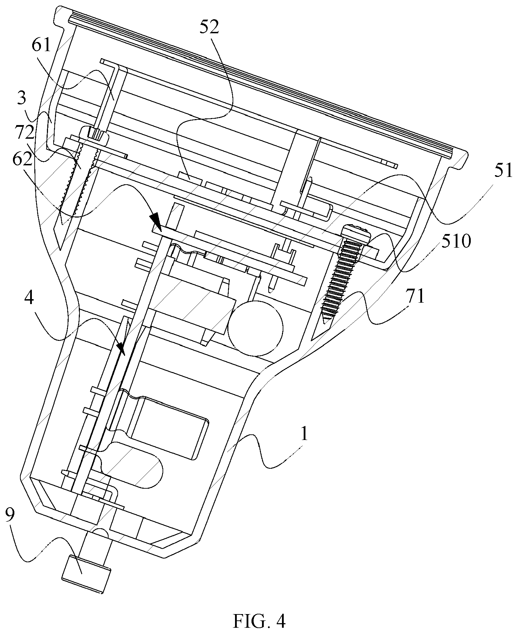

In order to illustrate the technical solutions of the present application, the present application is described in detail with reference to specific accompanying figures and embodiments below:
Referring to FIG. 1 and FIG. 4, an intelligent lamp provided by an embodiment of the present application includes a housing 1having an opening at one end thereof, a lens 2 arranged to be covered on the end of the housing 1having the opening, a heat sink 3 arranged in the housing 1, a drive assembly 4 arranged in the housing 1, a light source module 5 arranged on the heat sink 3 and electrically connected with the drive assembly 4, and a communication module 6 arranged in the housing 1 and electrically connected with the drive assembly 4.

Where, the light source module 5 includes a light source board 51 disposed on the heat sink 3, the communication module 6 includes an antenna 61 disposed on the light source board 51 and a RF (Radio Frequency) module 62 arranged on one side of the heat sink 3 away from the light source board 51, that is, the heat sink 3 and the light source board 51 divide the antenna 61 and the RF module 62 into two regions. The RF module 62 is located in a cavity formed by the heat sink 3 and the housing 1. The antenna 61 is located in a cavity formed by the light source board 51 and the housing 1. A metal terminal 63 is fixedly connected with the RF module 62, the metal terminal 63 sequentially passes through the heat sink 3 and the light source board 51 and is fixedly connected with one end of the antenna 61, the other end of the antenna 61 is fixedly connected with the light source board 51. In a specific application, the design concept is not only applicable to lamp-related products such as light bulbs, but also applicable to other related products containing the communication module 6.

Due to the fact that the antenna 61 is disposed on the light source board 51 in the intelligent lamp of this embodiment, the antenna 61 is overhead, so that electronic components may be normally arranged on the light source board 51 below the antenna 61. Space is effectively utilized. The light source board 51 does not need to be provided with a through hole of antenna in a conventional manner; meanwhile, a transmission quality of the antenna 61 is higher than that of the traditional solution; furthermore, one end of the antenna 61 is fixedly connected with the RF module 62 through the metal terminal 63, and the other end of the antenna 61 is fixedly connected with the light source board 51, the antenna 61 does not need to be stabilized by other structure as compared to the existing intelligent lamp, the antenna 61 is high in stability and is not affected by skew of the communication module 6, so that the antenna 61 may be enabled to match with different protocol requirements, for example, this antenna 61 may be shared by many different protocols such as Zigbee 3.0 and BLE (Bluetooth Low Energy), customization of protocols for customers is acceptable, and the antenna has a wider application scope.

Where, the housing 1 and the lens 2 protect the light source module 5 and the communication module 6 inside them. The housing 1 is a plastic housing 1 and has a lower cost as compared to plastic-clad aluminum housing 1. The heat sink 3 is a stamped aluminum member, and the light source board 51 is an aluminum base board.

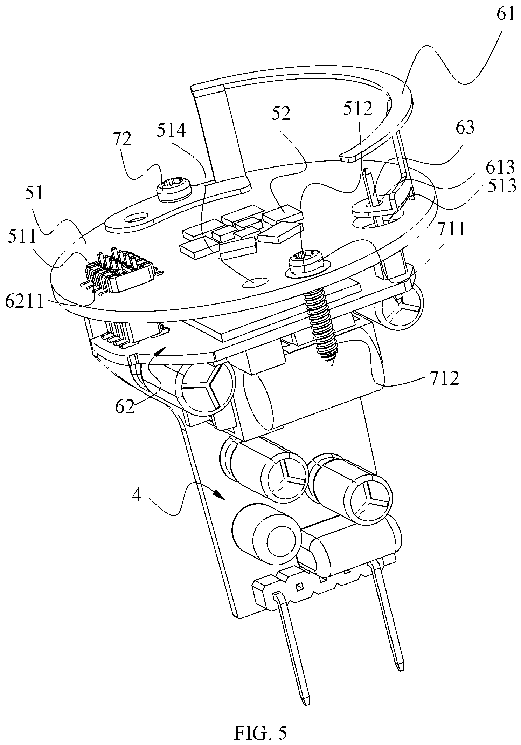

In one embodiment, with further reference to FIG. 5, the metal terminal 63 is a PIN needle connected between the RF module 62 and the antenna 61. The PIN needle is a metal material used for completing conduction (transmission) of the electrical (signal)in a connector, that is, the PIN needle may realize an electrical connection between the RF module 62 and the antenna 61, and may also realize a communication connection between the RF module 62 and the antenna 61. The material of the PIN needle is a "tungsten carbide" material which has very high hardness, strength, wear resistance, and corrosion resistance. Specifically, two ends of the PIN needle are respectively welded with the antenna 61 and the RF module 62. One end of the antenna 61 is provided with a first through hole 613 to be passed through by the PIN needle, the light source board 51 and the heat sink 3 are respectively provided with a second through hole 513 and a third through hole (not shown) to be passed through by the PIN needle, where the apertures of the second through hole 513 and the third through hole are larger than a cross-sectional diameter of the PIN needle, so that a short circuit phenomenon occurring due to the contact between the PIN needle and the light source board 51 or the heat sink 3 is avoided.

In one embodiment, a vertical distance between the top surface of the antenna 61 and the light source board 51 is greater than or equal to 3 mm, that is, the antenna 61 is overhead 3 mm, there is no signal shielded by metal object within the range of 3 mm, so that the transmission quality of the antenna 61 is higher. Of course, the height of the antenna 61 may not be too high, the height is specifically designed according to the spacing between the lens 2 and the light source board 51.

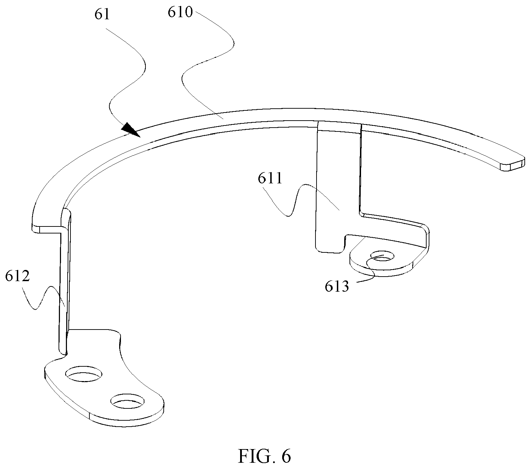

In one embodiment, with further reference to FIG. 6, the antenna 61 includes an antenna body 610, a first support 611, and a second support 612, where the antenna body 610 is disposed on the light source board 51, the first support 611 extends from one end of the antenna body 610 towards the direction of the light source board 51 and is in contact with the metal terminal 63; the second support 612 extends from the other end of the antenna body 610 towards the direction of the light source board 51. The second support 612 is fixedly connected with the light source board 51. Both the second support 612 and the light source board 51 are fixedly connected with the heat sink 3, the second support 612 and the light source board 51 are fixedly connected with the heat sink 3 by means of a connecting piece 72 such as screws. The antenna body 610 is located on the surface of the light source board 51 through the first support 611 and the second support 612, so that electronic components may be arranged below the antenna body 610 as usual, and the space is effectively utilized. In a specific application, the antenna body 610, the first support 611, and the second support 612 are an integrally formed structure such as an integrally formed structure made from the same material.

In one embodiment, in particular, referring to FIG. 4 and FIG. 5, a plurality of grounding portions are arranged on the RF module 62, the light source board 51 is in contact with the RF module 62 in a conductive manner through the grounding portions (not shown), that is, the grounding of the light source board 51 and the grounding of the RF module 62 are unified, the light source board 51 is attached to and conductive with the heat sink 3, and the heat sink 3 is attached to the housing 1, so that the housing 1, the heat sink 3, the light source board 51, and the grounding portions form a loop circuit, when a high voltage such as 8 KV high voltage is applied on the housing 1 of the entire lamp, the high voltage may be conductive through the loop circuit, such that the entire lamp would not damage the RF module 62 and the power supply circuit in high voltage environment.

In one embodiment, in particular, referring to FIG. 4 and FIG. 5, the intelligent lamp further includes a first metal fixing member 71 configured to secure the light source board 51 and the heat sink 3, a position of the light source board 51 which is in contact with the first metal fixing member 71 is provided with a bonding pad 512, and the bonding pad 512 is electrically connected with the grounding portions. The first metal fixing member 71 includes a head portion 711 and a rod portion 712 which are sequentially connected. The head portion 711 is in contact with the bonding pad 512,the rod portion 712 is in contact with the light source board 51, so that the light source board 51, the first metal fixing member 71, the bonding pad 512, and the grounding portions form a loop circuit. Additionally, due to the fact that the light source board 51 is attached with the heat sink 3, the heat sink 3 is attached with the housing 1, the housing 1, the heat sink 3, the light source board 51, the first metal fixing member 71, the bonding pad 512 and the grounding portions form a loop circuit. Specifically, the grounding portion may be a terminal or an elastic piece that connects the light source board 51 with the RF module 62, a fourth through hole 514 is arranged on the light source board 51, a fifth through hole corresponding to the fourth through hole 514 is arranged on the heat sink 3, the grounding portions pass through the fourth through hole 514 and the fifth through hole sequentially and are connected between the light source board 51 and the RF module 62.

Where, in this embodiment, a first connecting hole 510 is arranged on the light source board 51, the first metal fixing member 71 is in an interference fit with the first connecting hole 510, a position of the light source board 51 corresponding to the first connecting hole 510 is provided with the afore-mentioned bonding pad 512, specifically, the first metal fixing member 71 is a screw with a nominal diameter of 2 mm, and the aperture of the first connecting hole 510 is 1.9 mm, so that a tight fit is formed between the first metal fixing member 71 and the first connecting hole 510.

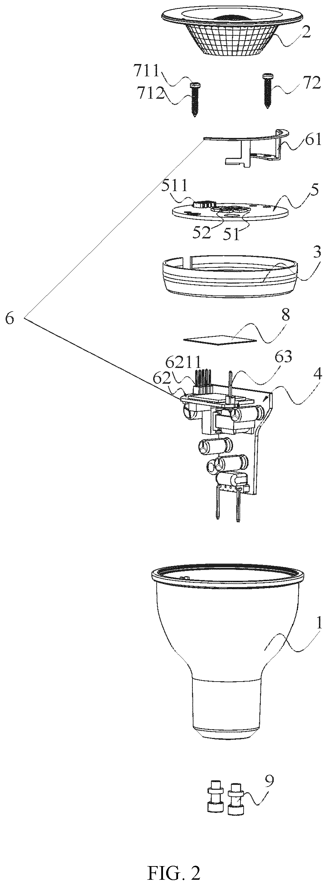

In one embodiment, in particular, referring to FIG. 2, the intelligent lamp further includes an insulating gasket 8 arranged between the heat sink 3 and the RF module 62, that is, the insulating gasket 8 is arranged between the PCB 621 and the heat sink 3 so as to avoid contact and conductivity between the PCB 621 and the heat sink 3.

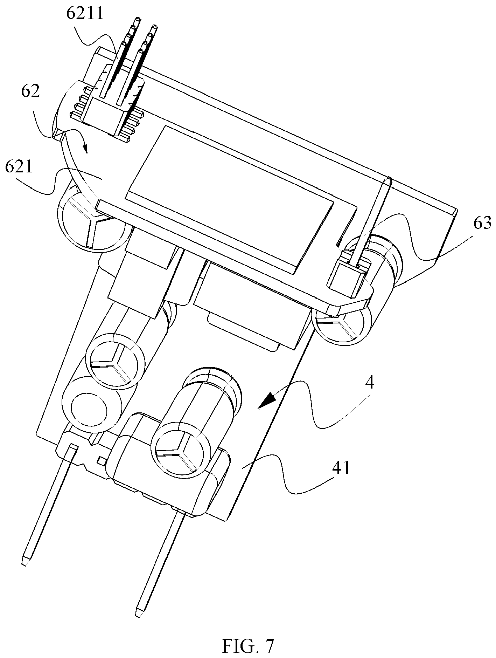

In one embodiment, in particular, referring to FIG. 7, The RF module 62 has a plug-in connection with the drive assembly 4, the drive assembly 4 includes a driving board 41 and electronic components located on the driving board 41, the RF module 62 includes a PCB 621 and electronic components disposed on the PCB 621. The PCB 621 is in an orthogonal plug-in connection with the driving board 41, so that the driving board 41 is electrically connected with the PCB 621, that is, the drive assembly 4 is enabled to be electrically connected with the RF module 62; a metal terminal 63 connected with the antenna 61 is fixedly arranged on the PCB 621, such that the driving assembly 4 may drive the RF module 62 and the antenna 61.

In particular, in one embodiment, with further reference to FIG. 2, an output terminal 6211 is arranged on the PCB 621, and an input terminal 511 electrically connected with the output terminal 6211 is arranged on the light source board 51 .In this embodiment, the output terminal 6211 is a male terminal, and the input terminal 511 is a female terminal. Of course, in other embodiment, the output terminal 6211 is a female terminal, and the input terminal 511 is a male terminal, as long as an electrical connection between the PCB board 621 and the light source board 51 may be realized.

The intelligent lamp further includes a copper pin 9 electrically connected with an external power source, the copper pin 9 is electrically connected with the drive assembly 4, and supply current for the RF module 62 and the light source module 5 respectively through the driving assembly 4.

Meanwhile, referring to FIG. 2, the light source module 5 further includes at least one LED light source 52 disposed on the light source board 51. The drive assembly 4 is electrically connected with the LED light source 52 and is configured to drive the LED light source 52 to emit light.

In one embodiment, since the antenna 61 is disposed on the light source board 51, the light source may be arranged in the middle of the light source board 51, so that the lens 2 may adopt a single-head lens structure, that is, there is only one lens 2, the current market mainstream demand is met.

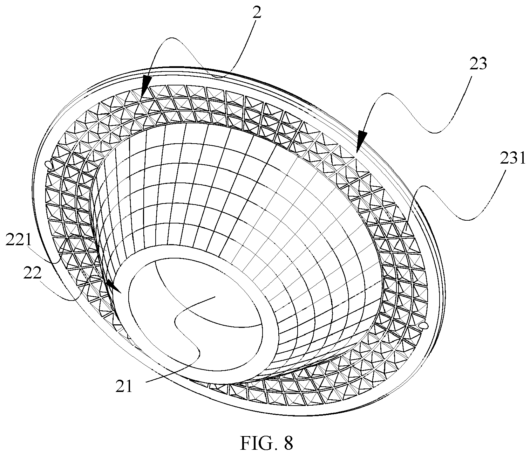

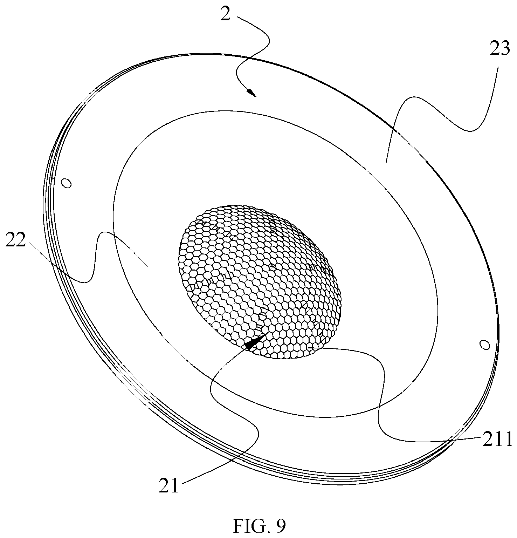

Where, in particular, referring to FIG. 8 and FIG. 9, the lens 2 is integrally formed and includes a bead portion 21, a cup 22 and a ring 23 that are sequentially arranged from inside to outside, the bead portion 21 is arranged to be corresponding to the LED light source 52, the cup 22 is arranged to be covered on the LED light source 52, one end of the cup 22 away from the LED light source 52 is provided with the bead portion 21, the ring 23 extends outwardly from one end of the cup 22 away from the LED light source 52. Specifically, a surface of the bead portion 21 away from the LED light source 52 is provided with a first protrusion 211, the first protrusion 211 is configured to scatter light emitted by the LED light source 52, a second protrusion 221 and a third protrusion 231 are respectively arranged on the surface of the ring 23 and the cup 22that face the LED light source 52, and the second protrusion 221 and the third protrusion 231 may further scatter light. In a specific application, shapes of the first protrusion 211, the second protrusion 221 and the third protrusion 231 include hexagon, rhombus and ring. A selection of these shapes may be made according to specific requirement.

According to the descriptions mentioned above, the path for supplying electric power for the LED light source 52 is that: alternating current of the external power supply reaches the drive assembly 4 through the copper pin 9, and then is supplied to the light source board 51 through the cooperation of the output terminal 6211 and the input terminal 511, so that the current is supplied to the LED light source 52.

A path for supplying electric power for the antenna 61 is that: alternating current of the external power supply is transmitted to the drive assembly 4 through the copper pin 9, and then is transmitted to the PCB 621, and the RF module 62 transmits the alternating current to the antenna 61 through the metal terminal 63.

A control path of the communication module 6 towards the light source module 5 is that: the antenna 61 receives a control signal and transmits the control signal to the RF module 62, and the RF module 62 controls the drive assembly 4 according to the control signal, so that the LED light source 52 is driven to emit light.

An assembly process of the intelligent lamp is as follows: firstly, the PIN needle is welded on the RF module 62, the RF module 62 and the drive assembly 4 are inserted together and are arranged in the housing 1, the heat sink 3 is sleeved, then, the light source board 51 and the antenna 61 are placed in position and are secured through screws, and the other end of the PIN needle is secured with the antenna 61through soldering. The simple procedure may reduce an occurrence of phenomenon of collision and deformation of the antenna 61 during transportation and testing process of multiple procedures, the cost performance of the antenna 61 is greatly improved on the basis that the performance of the antenna 61 is optimized.

## Claims

1. An intelligent lamp, comprising:
a housing (1) having an opening at one end thereof;
a lens (2) arranged to be covered on the end of the housing (1) having the opening;
a heat sink (3) arranged in the housing (1);
a drive assembly (4) arranged in the housing (1);
a light source module (5) arranged on the heat sink (3) and electrically connected with the drive assembly (4), the light source module (5) comprises a light source board (51) disposed on the heat sink (3); and
a communication module (6) electrically connected with the drive assembly (4) and comprising an antenna (61) disposed on the light source board (51) and a RF module (62) arranged on one side of the heat sink (3) away from the light source board (51),
**characterized in that**, a metal PIN needle (63) is fixedly connected with the RF module (62) and sequentially penetrates through the heat sink (3) and the light source board (51) and is in contact with one end of the antenna (61), the other end of the antenna (61) is fixedly connected with the light source board (51);
wherein the antenna (61) comprises:
an antenna body (610) disposed on the light source board (51);
a first support (611) extending from one end of the antenna body (610) towards the direction of the light source board (51) and contacted with the metal PIN needle (63); and
a second support (612) extending from the other end of the antenna body (610) towards the direction of the light source board (51) and fixedly connected with the light source board (51);
the antenna body (610) is located on a surface of the light source board (51) through the first support (611) and the second support (612).

2. The intelligent lamp according to claim 1, **characterized in that**, a vertical distance between the top surface of the antenna (61) and the light source board (51) is greater than or equal to 3 mm.

3. The intelligent lamp according to any one of claims 1-2, **characterized in that**, a plurality of grounding portions are arranged on the RF module (62), the light source board (51) is in contact with the RF module (62) in a conductive manner through the grounding portions, the light source board (51) is attached to and conductive with the heat sink (3), and the heat sink (3) is attached with the housing (1).

4. The intelligent lamp according to claim 3, **characterized in that**, the intelligent lamp further comprises a first metal fixing member configured to immobilize the light source board (51) and the heat sink (3), a portion of the light source board (51) which is in contact with the first metal fixing member is provided with a bonding pad (512), and the bonding pad (511) is electrically connected with the grounding portions;
the first metal fixing member comprises a head portion (711) and a rod portion (712) which are connected in sequence, the head portion (711) is in contact with the bonding pad (512), and the rod portion (712) is in contact with the light source board (51).

5. The intelligent lamp according to claim 4, **characterized in that**, a first connecting hole is arranged on the light source board (51), the first metal fixing member is in an interference fit with the first connecting hole, and the bonding pad (512) is arranged on a position of the light source board (51) corresponding to the first connecting hole.

6. The intelligent lamp according to claim 1, **characterized in that**, the intelligent lamp further comprises an insulating gasket (8) disposed between the heat sink (3) and the RF module (62).

7. The intelligent lamp according to claim 1, **characterized in that**, the light source module (5) further comprises:
at least one LED light source (52) arranged on the light source board (51), and the drive assembly (4) is electrically connected with the LED light source (52).

8. The intelligent lamp according to claim 7, **characterized in that**, the lens (2) is a single-head lens, and comprises:
a bead portion (21) arranged to be corresponding to the LED light source (52);
a cup (22) arranged to be covered on the LED light source (52), the bead portion (21) is arranged at one end of the cup (22) away from the LED light source (52); and
a ring (23) extending outwardly from one end of the cup (22) away from the LED light source (52);
the bead portion (21), the cup (22) and the ring (23) are sequentially arranged from inside to outside;
wherein a surface of the bead portion (21) away from the LED light source (52) is provided with a first protrusion (211), and a surface of the ring (23) and a surface of the cup (22) facing the LED light source (52) are provided with a second protrusion (221) and a third protrusion (231), respectively.

## Patentansprüche

1. Intelligente Lampe, umfassend:
ein Gehäuse (1), das eine Öffnung an einem Ende desselben hat;
eine Linse (2), die so angeordnet ist, um an dem Ende des Gehäuses (1), das die Öffnung hat, bedeckt zu werden;
eine Wärmesenke (3), die im Gehäuse (1) angeordnet ist;
eine Antriebsbaugruppe (4), die im Gehäuse (1) angeordnet ist;
ein Lichtquellenmodul (5), das an der Wärmesenke (3) angeordnet ist und mit der Antriebsbaugruppe (4) elektrisch verbunden ist, wobei das Lichtquellenmodul (5) eine Lichtquellenplatine (51) umfasst, die an der Wärmesenke (3) angeordnet ist; und
ein Kommunikationsmodul (6), das mit der Antriebsbaugruppe (4) elektrisch verbunden ist und eine Antenne (61), die an der Lichtquellenplatine (51) angeordnet ist, und ein RF-Modul (62), das an einer Seite der Wärmesenke (3) angeordnet ist, die von der Lichtquellenplatine (51) abgewendet ist, umfasst,
**dadurch gekennzeichnet, dass** eine metallische Stiftnadel (63) mit dem RF-Modul (62) fest verbunden ist und durch die Wärmesenke (3) und die Lichtquellenplatine (51) sequentiell durchdringt und mit einem Ende der Antenne (61) im Kontakt ist, wobei das andere Ende der Antenne (61) mit der Lichtquellenplatine (51) fest verbunden ist;
worin die Antenne (61) umfasst:
einen Antennenkörper (610), der an der Lichtquellenplatine (51) angeordnet ist;
eine erste Stütze (611), die sich von einem Ende des Antennenkörpers (610) auf die Richtung der Lichtquellenplatine (51) zu erstreckt und mit der metallischen Stiftnadel (63) im Kontakt ist; und
eine zweite Stütze (612), die sich von dem anderen Ende des Antennenkörpers (610) auf die Richtung der Lichtquellenplatine (51) zu erstreckt und mit der Lichtquellenplatine (51) fest verbunden ist;
der Antennenkörper (610) an einer Fläche der Lichtquellenplatine (51) durch die erste Stütze (611) und die zweite Stütze (612) gelegen ist.

2. Intelligente Lampe nach Anspruch 1, **dadurch gekennzeichnet, dass** ein vertikaler Abstand zwischen der oberen Fläche der Antenne (61) und der Lichtquellenplatine (51) größer als oder gleich 3 mm ist.

3. Intelligente Lampe nach einem der Ansprüche 1-2, **dadurch gekennzeichnet, dass** eine Vielzahl von Erdungsabschnitten am RF-Modul (62) angeordnet ist, die Lichtquellenplatine (51) mit dem RF-Modul (62) leitend über die Erdungsabschnitte im Kontakt steht, die Lichtquellenplatine (51) an der Wärmesenke (3) angebracht und damit leitend ist, und die Wärmesenke (3) mit dem Gehäuse (1) angebracht ist.

4. Intelligente Lampe nach Anspruch 3, **dadurch gekennzeichnet, dass** die intelligente Lampe ferner ein erstes metallisches Befestigungselement umfasst, das dazu eingerichtet ist, die Lichtquellenplatine (51) und die Wärmesenke (3) festzulegen, ein Abschnitt der Lichtquellenplatine (51), der mit dem ersten metallischen Befestigungselement im Kontakt steht, mit einer Bondinsel (512) versehen ist, und die Bondinsel (512) mit den Erdungsabschnitten elektrisch verbunden ist;
das erste metallische Befestigungselement einen Kopfabschnitt (711) und einen Stababschnitt (712) umfasst, die der Reihe nach verbunden sind, wobei der Kopfabschnitt (711) mit der Bondinsel (512) im Kontakt steht, und der Stababschnitt (712) mit der Lichtquellenplatine (51) im Kontakt steht.

5. Intelligente Lampe nach Anspruch 4, **dadurch gekennzeichnet, dass** ein erstes Verbindungsloch an der Lichtquellenplatine (51) angeordnet ist, das erste metallische Befestigungselement mit dem ersten Verbindungsloch in Presspassung steht, und die Bondinsel (512) an einer Stellung der Lichtquellenplatine (51) angeordnet ist, die dem ersten Verbindungsloch entspricht.

6. Intelligente Lampe nach Anspruch 1, **dadurch gekennzeichnet, dass** die intelligente Lampe ferner eine Isolierdichtung (8) umfasst, die zwischen der Wärmesenke (3) und dem RF-Modul (62) angeordnet ist.

7. Intelligente Lampe nach Anspruch 1, **dadurch gekennzeichnet, dass** das Lichtquellenmodul (5) ferner umfasst:
zumindest eine LED-Lichtquelle (52), die an der Lichtquellenplatine (51) angeordnet ist, und die Antriebsbaugruppe (4) ist mit der LED-Lichtquelle (52) elektrisch verbunden.

8. Intelligente Lampe nach Anspruch 7, **dadurch gekennzeichnet, dass** die Linse (2) eine Einzelkopflinse ist und umfasst:
einen Wulstabschnitt (21), der so angeordnet ist, dass er der LED-Lichtquelle (52) entspricht;
eine Schale (22), die dazu eingerichtet ist, an der LED-Lichtquelle (52) bedeckt zu werden, der Wulstabschnitt (21) an einem Ende der Schale (22), das von der LED-Lichtquelle (52) abgewendet ist, angeordnet ist; und
einen Ring (23), der sich nach außen von einem Ende der Schale (22), das von der LED-Lichtquelle (52) abgewendet ist, erstreckt;
der Wulstabschnitt (21), die Schale (22) und der Ring (23) von innen nach außen sequentiell angeordnet sind;
worin eine Fläche des Wulstabschnitts (21), die von der LED-Lichtquelle (52) abgewendet ist, mit einem ersten Vorsprung (211) versehen ist, und eine Fläche des Ringes (23) und eine Fläche der Schale (22), die der LED-Lichtquelle (52) zugewendet sind, jeweils mit einem zweiten Vorsprung (221) und mit einem dritten Vorsprung (231) versehen sind.

## Revendications

1. Lampe intelligente, comprenant :
un boîtier (1) ayant une ouverture à une extrémité de celui-ci ;
une lentille (2) disposée pour être recouverte sur l'extrémité du boîtier (1) ayant l'ouverture ;
un dissipateur thermique (3) disposé dans le boîtier (1) ;
un ensemble d'entraînement (4) disposé dans le boîtier (1) ;
un module de source lumineuse (5) disposé sur le dissipateur thermique (3) et connecté électriquement à l'ensemble d'entraînement (4), le module de source lumineuse (5) comprend une carte de source lumineuse (51) disposée sur le dissipateur thermique (3) ; et
un module de communication (6) connecté électriquement à l'ensemble d'entraînement (4) et comprenant une antenne (61) disposée sur la carte de source lumineuse (51) et un module RF (62) disposé sur un côté du dissipateur thermique (3) à l'écart de la carte de source lumineuse (51),
**caractérisée en ce qu'**une aiguille de broche métallique (63) est connectée de manière fixe au module RF (62) et pénètre de manière séquentielle à travers le dissipateur thermique (3) et la carte de source lumineuse (51) et est en contact avec une extrémité de l'antenne (61), l'autre extrémité de l'antenne (61) est connectée de manière fixe à la carte de source lumineuse (51) ; où l'antenne (61) comprend :
un corps d'antenne (610) disposé sur la carte de source lumineuse (51) ;
un premier support (611) s'étendant d'une extrémité du corps d'antenne (610) vers la direction de la carte de source lumineuse (51) et en contact avec l'aiguille de broche métallique (63) ; et
un second support (612) s'étendant de l'autre extrémité du corps d'antenne (610) vers la direction de la carte de source lumineuse (51) et connecté de manière fixe à la carte de source lumineuse (51) ;
le corps d'antenne (610) est situé sur une surface de la carte de source lumineuse (51) à travers le premier support (611) et le second support (612).

2. Lampe intelligente selon la revendication 1, **caractérisée en ce qu'**une distance verticale entre la surface supérieure de l'antenne (61) et la carte de source lumineuse (51) est supérieure ou égale à 3 mm.

3. Lampe intelligente selon l'une quelconque des revendications 1 et 2, **caractérisée en ce que**, une pluralité de parties mises à la terre sont disposées sur le module RF (62), la carte de source lumineuse (51) est en contact avec le module RF (62) d'une manière conductrice à travers les parties mises à la terre, la carte de source lumineuse (51) est fixée à et conductrice avec le dissipateur thermique (3), et le dissipateur thermique (3) est fixé au boîtier (1).

4. Lampe intelligente selon la revendication 3, **caractérisée en ce que** la lampe intelligente comprend en outre un premier élément de fixation métallique configuré pour immobiliser la carte de source lumineuse (51) et le dissipateur thermique (3), une partie de la carte de source lumineuse (51) qui est en contact avec le premier élément de fixation métallique est pourvue d'un plot de connexion (512), et le plot de connexion (511) est connecté électriquement aux parties mises à la terre ;
le premier élément de fixation métallique comprend une partie de tête (711) et une partie de tige (712) qui sont connectées en séquence, la partie de tête (711) est en contact avec le plot de connexion (512), et la partie de tige (712) est en contact avec la carte de source lumineuse (51).

5. Lampe intelligente selon la revendication 4, **caractérisée en ce qu'**un premier trou de connexion est disposé sur la carte de source lumineuse (51), le premier élément de fixation métallique est en ajustement serré avec le premier trou de connexion, et le plot de connexion (512) est disposé sur une position de la carte de source lumineuse (51) correspondant au premier trou de connexion.

6. Lampe intelligente selon la revendication 1, **caractérisée en ce que** la lampe intelligente comprend en outre un joint isolant (8) disposé entre le dissipateur thermique (3) et le module RF (62).

7. Lampe intelligente selon la revendication 1, **caractérisée en ce que** ledit module de source lumineuse (5) comprend en outre :
au moins une source lumineuse à DEL (52) disposée sur la carte de source lumineuse (51), et l'ensemble d'entraînement (4) est connecté électriquement à la source lumineuse à DEL (52).

8. Lampe intelligente selon la revendication 7, **caractérisée en ce que** la lentille (2) est une lentille à tête unique, et comprend :
une partie de talon (21) disposée pour correspondre à la source lumineuse à DEL (52) ;
une coupe (22) disposée pour être recouverte sur la source lumineuse à DEL (52), la partie de talon (21) est disposée à une extrémité de la coupe (22) écartée de la source lumineuse à DEL (52) ; et
un anneau (23) s'étendant vers l'extérieur à partir d'une extrémité de la coupe (22) écartée de la source lumineuse à DEL (52) ;
la partie de talon (21), la coupe (22) et la bague (23) sont disposées de manière séquentielle de l'intérieur vers l'extérieur ;
où une surface de la partie de talon (21) écartée de la source lumineuse à DEL (52) est pourvue d'une première saillie (211), et une surface de l'anneau (23) et une surface de la coupe (22) faisant face à la source lumineuse à DEL (52) sont pourvues d'une deuxième saillie (221) et d'une troisième saillie (231), respectivement.
